# EUROPEAN PATENT SPECIFICATION

(11) **EP 3 120 068 B1**
(45) Date of publication and mention of the grant of the patent: **13.11.2019**
(21) Application number: 15709699.1
(22) Date of filing: 16.03.2015
(51) Int. Cl.: F17C 13/04

(54) **VALVE FOR GAS TANK WITH OVERFILL PROTECTION DEVICE AND LEVEL GAUGE**
VENTIL FÜR GASBEHÄLTER MIT ÜBERFÜLLSCHUTZVORRICHTUNG UND FÜLLSTANDANZEIGE
SOUPAPE POUR RÉSERVOIR DE GAZ AVEC DISPOSITIF DE PROTECTION CONTRE LE TROP-PLEIN ET INDICATEUR DE NIVEAU

(30) Priority: 19.03.2014 LU 92405
(43) Date of publication of application: 25.01.2017
(73) Proprietor: Luxembourg Patent Company S.A., 7440 Lintgen (LU)
(72) Inventor: GOFFIN, Claude, B-6761 Chenois (BE); RODERES, Privat, B-6782 Habergy (BE); SCHMITZ, Jean-Claude, L-7340 Heisdorf (LU)
(74) Representative: Lecomte & Partners
(86) International application number: PCT/EP2015/055404
(87) International publication number: WO 2015/140094

(56) References cited:
- WO-A1-2009/013776
- DE-U1-202009 014 392
- FR-A1- 2 462 295
- FR-A2- 2 510 047
- US-A- 4 483 367
- US-A- 5 027 871
- US-A1- 2004 089 351
- US-A1- 2010 229 964

## Description

### Technical field

The invention is directed to the field of pressurized gas, more particularly to valves for tanks for pressurized gas like liquefied petroleum gas, e.g. for heating applications and fuel supply for combustion engines.

### Background art

Liquefied petroleum gas, also called LPG, is a flammable mixture of hydrocarbon gases used as a fuel in heating appliances and vehicles. Varieties of LPG bought and sold include mixes that are primarily propane (C₃H₈), primarily butane (C₄H₁₀) and, most commonly, mixes including both propane and butane, depending on the season - in winter more propane, in summer more butane. It has its boiling point below room temperature. The pressure at which LPG becomes liquid, called its vapor pressure, likewise varies depending on composition and temperature; for example, it is approximately 2.2 bar (32 psi) for pure butane at 20 °C (68 °F), and approximately 22 bar (320 psi) for pure propane at 55 °C (131 °F).

Tanks containing liquefied petroleum gas can be equipped with valves with multiple functions, i.e. with a shut-off device, an indication of the level of the liquid phase in the tank and/or an overfill protection device. For security reasons, it is indeed mandatory to limit the level of the liquid phase in a gas tank, in particular for a liquefied petroleum gas. Indeed, in the case of elevation of temperature, a reduced volume for the vapor phase could otherwise lead to an increase of the pressure up to a critical level for the tank. Such overfill protection devices limit therefore refilling of the tank when the level of the liquid phase reaches a predetermined level that can correspond for example to 80% of the tank capacity.

Prior art patent document published FR 2 462 295 A1 discloses a valve according the preamble of claim 1.

Prior art patent document published WO 2009/000770 A2 discloses a multiple functions valve for gas tanks, the valve comprising a shut-off device, a liquid phase level gauge and an overfill protection device. A pivoting float actuates the overfill protection device and also cooperates with the level gauge. The valve of this teaching limits however its applicability to different tank sizes and shapes since the pivoting float has to fulfil two functions, namely to detect an upper level of the liquid phase for limiting refilling and to measure a lower level of the liquid phase for providing useful autonomy information to the user. These two functions can be difficult for particular sizes and shapes of tanks.

Prior art patent document published JP 2005-233245 A discloses a similar multiple functions valve for gas tanks, comprising a shut-off device, a liquid phase level gauge and an overfill protection device. Similarly to the previous document, a pivoting float actuates the overfill protection device and cooperates with the level gauge.

Prior art patent document published US 4,483,367 A discloses, similarly to the two previous documents, a multiple functions valve for gas tanks, comprising a shut-off device, a liquid phase level gauge and an overfill protection device. Similarly, a pivoting float actuates the overfill protection device and cooperates with the level gauge.

Prior art patent documents published US 5,027,871 A and US 2006/0169325 A1 disclose also multiple functions valve for gas tanks, comprising a shut-off device, a liquid phase level gauge and an overfill protection device, and where a pivoting float actuates the overfill protection device and cooperates with the level gauge.

### Summary of invention

### Technical Problem

The invention has for technical problem to provide a multiple functions valve for gas tanks, like for liquefied petroleum gas, that are compatible for tanks of various sizes and shapes. More particularly, the invention has for technical problem to provide a multiple functions valve that provide a level gauge function and an overfill protection function for tanks of various sizes and shapes.

### Technical solution

The invention is directed to a valve for a gas tank, comprising: a body with a longitudinal axis to be mounted on an opening on a wall of the gas tank, with a gas outlet port and a gas refill port; a level gauge with a pivoting float for measuring the level of the liquid phase of the gas; an overfill protection device with a pivoting float for limiting refilling of the tank based on the level of the liquid phase of the gas; wherein the pivoting float of the level gauge is a first float pivoting around a first pivot axis distant from the body; and the pivoting float of the overfill protection device is a second float pivoting around a second pivot axis that is less distant from the body than the first axis, the valve comprises a tube extending parallel to the longitudinal axis from the body, the first float being pivotally mounted on said tube, and a support element with a sleeve portion fitted on a distal end of the tube; wherein the support element has two arms extending, preferably essentially parallel to the axis of the tube, from the sleeve and supporting the first pivot axis that extends between said two arms, one of the two arms extending in an offset manner with regard to the axis of the tube in order to get around a bevel gear on the rod, said arm extending in said offset manner essentially in a first plane.

The first axis can be at a distance of the body close to or equal zero.

According to a preferred embodiment of the invention, the distance between the first and second pivot axes in the longitudinal direction is greater than 50mm, preferably 100mm, more preferably 200mm.

According to a preferred embodiment of the invention, the overfill protection device is arranged on a side of the body that is intended to be inside the gas tank, said device preferably extending essentially along the longitudinal axis, the second pivot axis being on said device.

According to a preferred embodiment of the invention, the overfill protection device comprises a cavity in fluid connection with the refill port, said cavity housing a piston cooperating with a seat, said piston comprising an upstream face, a downstream face with a higher section as said upstream face and a passage between said upstream and downstream face, said downstream face delimiting an actuating chamber of said piston, said chamber being controlled by an auxiliary shut-off device actuated by the second float.

According to a preferred embodiment of the invention, the second float comprises a cam acting on a movable closure element of the auxiliary shut-off device, said float, when reaching a predetermined level, closing said device and thereby actuating the piston to a closed position.

The tube extends from a side of the body that is intended to be inside the gas tank.

According to a preferred embodiment of the invention, the tube houses a rod extending between the body and essentially the first pivot axis, said rob being actuated in rotation by the pivoting movement of the first float.

According to a preferred embodiment of the invention, the body comprises a visual gauge providing an indication that is based on the angular position of the rod and/or electric conversion means of the angular position of the rod for providing a signal informative of the level of the liquid phase of the gas.

According to a preferred embodiment of the invention, the sleeve portion comprises releasable fastening means with the tube, said means preferably comprising a screw extending radially through the wall of the sleeve portion and able to exert a pressure on the external surface of said tube.

According to a preferred embodiment of the invention, the other of the two arms extends in an offset manner with regard to the axis of the tube in order to provide space for a bevel gear of the first float, said arm extending in said offset manner essentially in a second plane transversal, preferably generally perpendicular, to the first one.

According to a preferred embodiment of the invention, the pivoting movement of the first float is converted into rotational movement of the rod through a bevel gear arrangement at the distal end of the tube, the support element being configured such that its arms do not extend radially beyond the axial projection of the sleeve, at least on one side of the support element in the direction of the first pivot axis.

According to a preferred embodiment of the invention, the first and second axes are at least generally parallel.

According to a preferred embodiment of the invention, it comprises a manual shut-off device and/or an electromagnetic shut-off device for the gas outlet, said device(s) being at least partly housed in the body.

According to a preferred embodiment of the invention, the body comprises on a side that is intended to be inside the gas tank an inlet port with a bore configured for receiving an inlet pipe.

According to a preferred embodiment of the invention, the body comprises an annular flat contact surface with gas sealing means for contacting the outer surface of the wall of the gas tank, said contact surface being essentially perpendicular to the longitudinal axis of the body. Alternatively, the body can comprise a conical male thread for a gas tight engagement with a corresponding thread on a neck of the tank. Still alternatively, the body can comprise a parallel male thread and a gasket in a groove formed in a cylindrical surface and/or a planar surface of the body.

According to a preferred embodiment of the invention, it comprises a pressure relief device at least partly housed in the body.

The invention is also directed to a gas tank comprising: an envelope for containing pressurized gas, said envelope comprising a bottom wall, a circular side wall and an upper wall with an opening; a valve mounted on the opening of the upper wall; wherein the valve is in accordance with the invention.

According to a preferred embodiment of the invention, the maximum height of the envelope is greater than 90%, preferably 100%, more preferably 150%, even more preferably 200%, of the diameter of said envelope.

According to a preferred embodiment of the invention, the first float is arranged such as to have a working pivoting sector that is mainly located in a lower half of the envelope and the second float is arranged such as to have a working pivoting sector that is mainly located in an upper half of the envelope.

According to a preferred embodiment of the invention, the first float has a pivoting radius that is comprised between 80% and 120% of the internal radius of the envelope and/or is arranged such to be at a nearest distance to the bottom wall of less than 40mm, preferably less than 30mm, more preferably less than 20mm.

According to a preferred embodiment of the invention, the overfill protection device is configured to stop refilling of the tank when the level of the liquid phase of the gas reaches a predetermined level corresponding to a fill rate of the tank comprised between 70% and 90%, preferably 75% to 85% of its total capacity.

The invention is also directed to a vehicle like a forklift, comprising: a combustion engine; and at least one gas tank for storing gaseous fuel and feeding the combustion engine; wherein the at least one gas tank is in accordance with the invention.

According to a preferred embodiment of the invention, the gas thank or at least one of the gas tanks is arranged horizontally, the upper wall with the opening being generally vertical.

### Advantages of the invention

The invention is particularly interesting in that having separate floats for the overfill protection device and for the level gauge provides more flexibility with regard to the sizes and shapes of the gas tanks to which the valve can be fitted. The tube construction for the level gauge is particularly interesting because it also provides an additional flexibility. The tube and the corresponding rod can be dimensioned in accordance with a specific tank, the rest of the valve remaining common for all tanks.

### Brief description of the drawings

Figure 1 is a perspective view of a gas tank with a valve in accordance with the invention;
Figure 2 is a side view of the valve of figure 1;
Figure 3 is a sectional view III-III of the valve of figure 2;
Figure 4 is a sectional view of the gas tank of figure 1;
Figure 5 is a sectional view of another gas tank similar to the tank of figure 1.

### Description of an embodiment

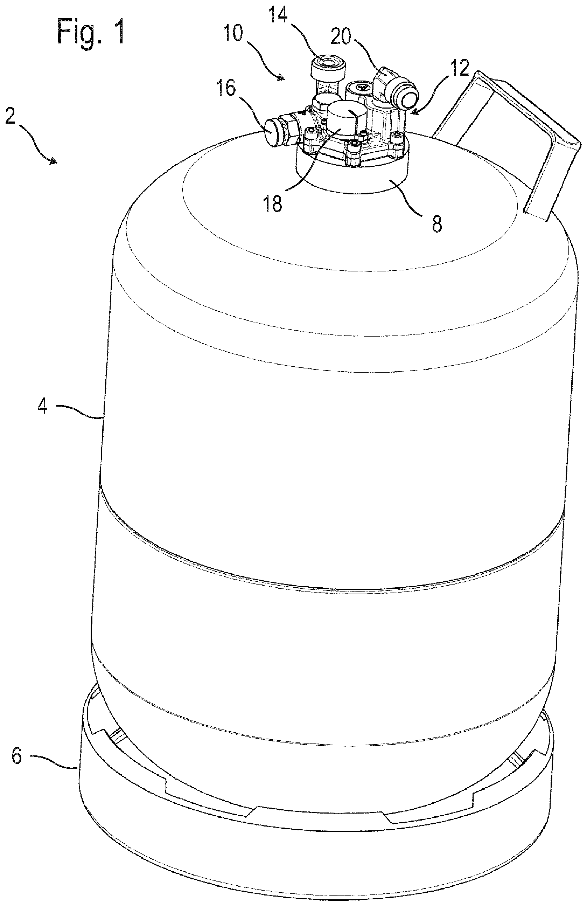

Figure 1 depicts a gas tank 2 with an envelope 4 shaped as a bottle, i.e. with a circular generally cylindrical shape. An external rim 6 is fixed to the bottom wall of the envelope 4 and servers as base of the tank. The upper or top wall of the envelope 4 comprises a neck 8 with an opening (not visible). A valve 10 is mounted on the neck 8 so as to cover and close the opening. The valve 10 is a multifunction valve with, among others, a valve body 12 rigidly fixed to the neck 8, an outlet port 14, a manual shut-off device 16 for the outlet port, a level gauge 18 and a refill port 20.

In the description that will follow, the expression "distal" and "proximal" are meant in relation with the valve body 4, i.e. "distal" meaning at distance from the body and "proximal" meaning at the proximity of the body.

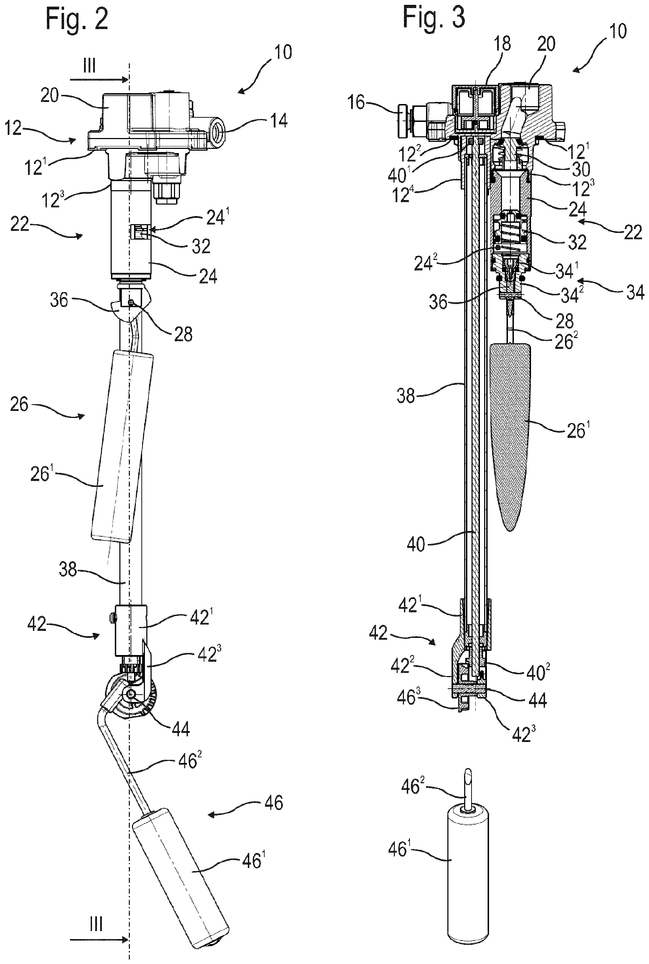

Figure 2 is a side view of the valve 10 of the tank of figure 2 and figure 3 is a sectional view III-III of the valve of figure 2. Both figures 2 and 3 will be described together.

As is visible in figures 2 and 3, the valve body 12 comprises an annular generally flat contact surface 12¹ with a circular recess 12² for a seal, said surface being intended to contact a corresponding surface of the neck 8 (figure 1).

The valve 10 comprises an overfill protection device 22. This device comprises a housing 24 that is fitted preferably by crimping on a corresponding sleeve or bore 12³ of the valve body 12. This housing 24 is in fluid connection with the refill port 20 through a check-valve 30. The check-valve 30 opens in the refill direction, i.e. towards the tank, and closes in the tank exit direction. A piston 32 is slidably received in the housing 24. The piston 32 comprises an upstream face (in the normal refill flow direction) cooperating with a seat in the housing 24. It comprises also a downstream face, opposed to the upstream face, delimiting an actuating chamber 24². The piston 32 comprises also a gas passage extending between the upstream and downstream faces. The actuating chamber 24² is also delimited by the cylindrical wall of the housing 24 and by the mobile closure element 34¹ of an auxiliary shut-off device 34. This closure element 34¹ is configured to cooperate with a seat in a sub-body 34² that is attached to, or part of, the housing 24.

A pivoting float 26 is mounted on the sub-body 34² of the auxiliary shut-off device 34. The float 26 comprises a floating element 26¹ attached to a lever 26², the lever being attached to a cam 36 that is pivotally mounted on a lower portion of the housing 24 via a pivoting axle 28. The cam 36 is configured to actuate the movable closure element 34¹ of the auxiliary shut-off device 34.

During refilling, the auxiliary shut-off device is open so that the refill pressure present on the upstream face of the piston 32 and also in the actuating chamber 24² is evacuated by the opened auxiliary shut-off device 34. The piston 32 can therefore slide against the resilient force of the spring located in the actuating chamber and tending to move the piston towards its seat. The passage at the seat is therefore open and the gas, in the liquid and/or gaseous phase, can flow to the tank through the window 24¹ in the wall of the housing 24.

As the level of the liquid phase of the gas rises, the float 26 floating on the liquid gas rises together with the liquid level so that the lever 26² progressively pivots around the axle 28 and rotates the cam 36. The cam 36 is configured to exert an effort on the movable closure element 34¹ of the auxiliary shut-off device 34 directed towards closing of said shut-off device 34. When the level of liquid gas reaches a predetermined level, the auxiliary shut-off device 34 is closed and the refill pressure on the upstream face of the piston 32 builds up in the actuating chamber 24². The downstream face of the piston 32 being of a larger section than the upstream one, the pressure in the actuating chamber 24² moves the piston 32 towards a closing position against the seat in the housing 24. The higher the refill pressure is the higher is the resulting force urging the piston against its seat. The passage through the auxiliary shut-off device 34 remains closed due to the cam 36 holding the movable closure element 34¹ against its seat.

The valve 10 comprises also a tube 38 that extends essentially in parallel to the longitudinal axis of the valve. This tube 38 is preferably straight. It is fitted in a sleeve or bore 12⁴ on the valve body 12. This fitting can be secured by usual means such a crimping, gluing, etc. The tube 38 houses a rod 40. This rod can comprise at its proximal end a permanent magnet 40¹ that magnetically cooperates with a corresponding permanent magnet housed in a portion of the body that is external to the internal pressure of the tank and that is mechanically coupled to a level gauge indicator 18. This latter can be a needle, a disk with marked areas, or any other equivalent or similar indicating means. Alternatively, the corresponding permanent magnet can be coupled to any electric and/or electronic device able to provide an electric signal representative of the angular position of the rod 40.

The distal end of the tube 40 supports a pivoting float 46 that comprises a floating element 46¹, a lever 46² and a bevel gear 46³. The lever 46² and bevel gear 46³ are pivotally mounted on a support element 42 that is fixed to the distal end of the tube. The lever 46² is rigidly attached to the bevel gear 46³ that is pivotally mounted on the axle 44. The distal end of the rod 40 bears a bevel gear 40² that meshes with the corresponding bevel gear 46³. Upon pivoting movement of the float 46, the rod 40 is rotated in order to provide an indication of the level of liquid in the tank to the level gauge 18.

The support element 42 comprises a sleeve 42¹ that is configured to be fitted around the tube 40. As is visible in figure 2, a radial screw can be engaged through the wall of the sleeve 42¹ for exerting a local pressure on the external surface of the tube, thereby securing said sleeve on said tube. The support element 42 comprises also two arms 42² and 42³. The first arm 42² extends downwardly from the sleeve 42¹ in an offset manner with regard to the axis of the tube in order to provide space for the bevel gear 46³. In other words, the arm 42² extends parallel and externally to the virtual cylindrical projection of the tube 40 and also of the sleeve 42¹. The second arm 42³ extends somehow differently from the first one, i.e. so as not to occupy any space outside of the above mentioned virtual cylindrical projection of the tube 40 and of the sleeve 42¹, on the opposite side to the first arm 42². More precisely, the second arm 42³ extends from the sleeve 42¹ essentially parallel to the axis of the tube and comprises an angled or curved end portion so as to reach the axis of the pivoting axle 44. In other words, the second arm 42³ extends essentially in an offset manner with regard to the axis of the tube and in a plane that is generally perpendicular to the plane in which the first arm 42² essentially extends. The offset extension of the second arm 42³ permits to provide space of the bevel gear 40². The angled or curbed end portion of the second arm 42³ permits to get around said bevel gear 40² and still reach and support the pivoting axle 44.

The above described construction of the support element 42 is advantageous in that it keeps one side, for instance the front side in figure 2 and the right side in figure 3, totally free for the movement of the float 26 of the overfill protection device. In the present example, the distal end of the float 26 does not reach the support element 42. Depending on the length of the tube 38, the support element 42 could be positioned in a more proximal position to the valve body 4 such that the float 26 in its pivoting movement would pass along the support element 42. Thanks to the specific construction of the support element 42, the housing 24 of the overfill protection device 22 and the tube 38 of the level gauge can be very close to each other without interference in the pivoting movement of the float 26 of the overfill protection device with the tube 38 and the support element 42. This permits therefore to provide a compact valve despite the several functions that it can have.

The valve 10 can be easily adapted to different sizes and shapes of tanks by adjusting the length of the tube and the rod housed in the tube. The characteristic of the overfill protection device requires less adaptation due to the fact that it has in any case to detect a high level of liquid, i.e. a level that is close to the valve body when the valve is mounted so as to extend vertically. The overfill protection device can be adapted by modifying the length and/or shape of the lever 26² and/or of the housing 24.

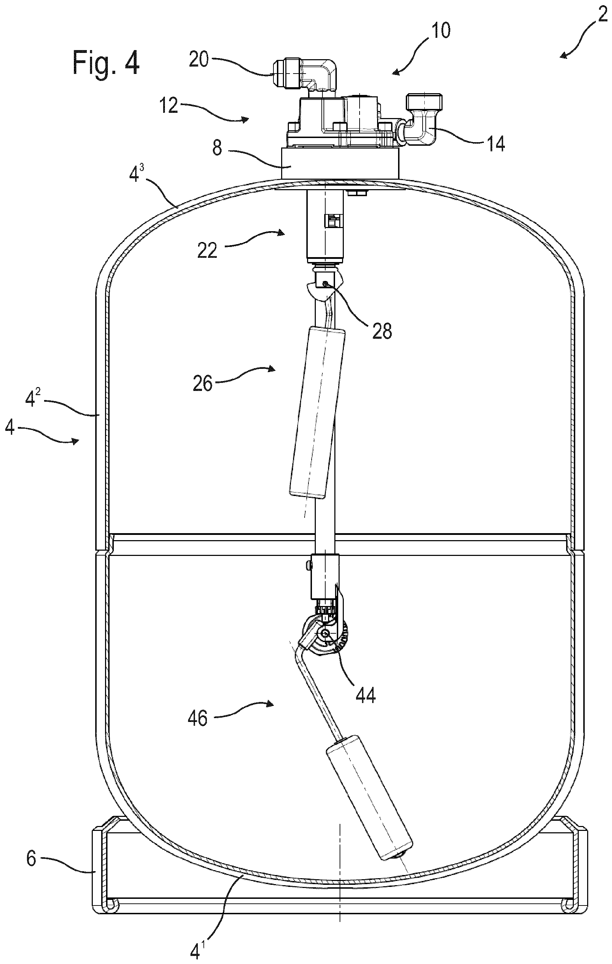

Figure 4 is a sectional view of the tank of figure 1. The tank 2 and the valve 10 extend vertically. The float 46 of the level gauge is positioned at a lower level whereas the float 26 of the overfill protection device is positioned at a higher level. The float 26 can therefore limit the refill of the tank when the liquid level reaches a high level that can for example correspond to 80% of the tank capacity. The float 46 of the level gauge can provide precise information of the level of liquid down to a low level, i.e. close to empty. Indeed, the level gauge is particularly useful to the users when the level becomes low, e. g. from half-full or three-quarter-full to totally empty. Due to the bottle-shape of the tank, the valve must usually be mounted so as to extend parallel and close to the longitudinal axis of the tank. The radius of the float is therefore essentially limited to half of the diameter of the tank. For tanks with a height that is significantly greater than the diameter, the valve of the invention is particularly interesting since the float 46 of the level gauge can be positioned close to the bottom wall 4¹ of the tank envelope 4 whereas the float 26 of the overfill protection device can remain at a higher position, close to the upper wall 4³ of the envelope 4.

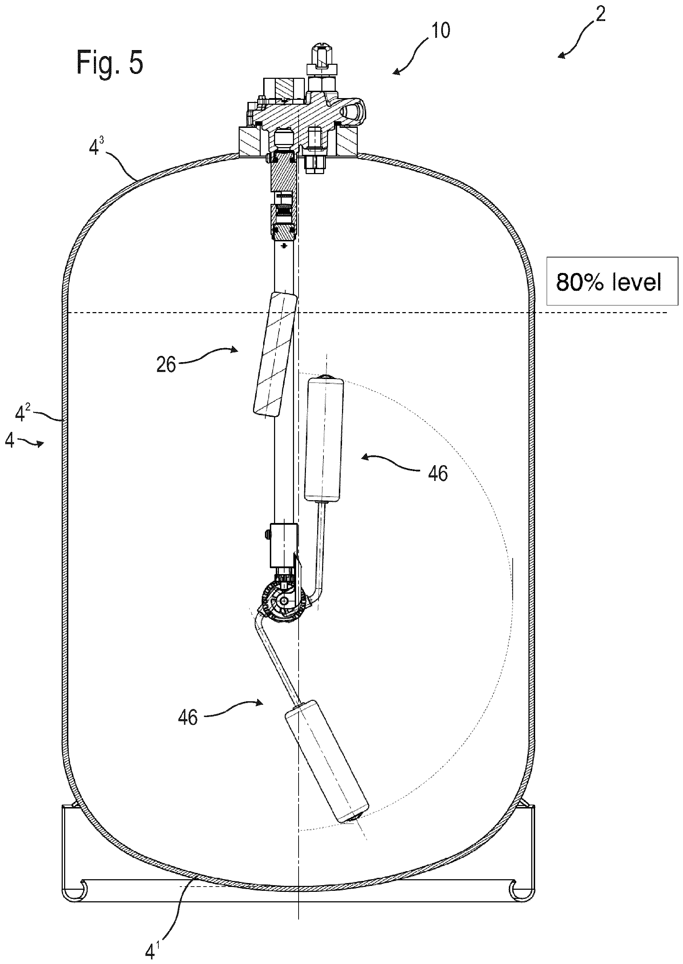

Figure 5 is a similar view to figure 4, the tank being similar to the tank of figure 4 and the valve showing the float of the level gauge float in two extreme positions. The level corresponding to 80% of the capacity is indicated in figure 5. We can observe that the 80% level is higher than the upper position of the float 46 of the level gauge. The float of the level gauge can then be arranged such as to have a working pivoting sector that is mainly located in a lower half of the envelope and the second float is arranged such as to have a working pivoting sector that is mainly located in an upper half of the envelope.

The maximum height of the envelope 4 can be greater than 80%, preferably 100%, more preferably 150%, even more preferably 200%, of the diameter of said envelope.

The float of the gauge level can have a pivoting radius that is comprised between 80% and 120% of the internal radius of the envelope and/or is arranged such to be at a nearest distance to the bottom wall of less than 40mm, preferably less than 30mm, more preferably less than 20mm.

The tank must not necessarily be positioned so as to extend vertically. Indeed, under some circumstances, the bottle-shaped tanks can extend horizontally. In such a case, the valve can also extend horizontally. The shape of the levers of the float must then be adapted. With reference to figure 5, if we consider that the tank 2 would be tilted at 90° counter clockwise, the float 46 of the level gauge, more particularly the shape and angular position of its lever 46² (figure 2), would then be adapted so as to have a working sector ranging from one side of the lateral wall 4² to the opposite side of said wall. In other words, the working sector would correspond to the one visible in figure 5, this visible sector being rotated of 90° clockwise. The float 26 of the overfill protection device, more particularly the shape and angular position of its lever 26² (figure 2), would be adapted such that the float has a working sector corresponding essentially to a higher level, i.e. the left half of the tank in figure 5.

## Claims

1. Valve (10) for a gas tank (2), comprising:
- a body (12) with a longitudinal axis, to be mounted on an opening on a wall (4³) of the gas tank (2), with a gas outlet port (14) and a gas refill port (20);
- a level gauge (18) with a pivoting float (46) for measuring the level of the liquid phase of the gas;
- an overfill protection device (22) with a pivoting float (26) for limiting refilling of the tank based on the level of the liquid phase of the gas;
wherein
the pivoting float (46) of the level gauge is a first float pivoting around a first axis (44) distant from the body (12); the pivoting float (26) of the overfill protection device (22) is a second float pivoting around a second axis (28) that is less distant from the body (12) than the first axis (44);
the valve further comprises a tube (38) extending parallel to the longitudinal axis from the body (12), the first float (46) being pivotally mounted on said tube (38), and a support element (42) with a sleeve portion (42¹) fitted on a distal end of the tube (38);
**characterized in that**
the support element (42) has two arms (42², 42³) extending, preferably essentially parallel to the axis of the tube (38), from the sleeve (42¹) and supporting the first pivot axis (44) that extends between said two arms (42², 42³), one (42³) of the two arms (42², 42³) extending in an offset manner with regard to the axis of the tube (38) in order to get around a bevel gear (40²) on the rod (40), said arm (42³) extending in said offset manner essentially in a first plane.

2. Valve (10) according to claim 1, **characterized in that** the distance between the first and second axes (44, 28) in the longitudinal direction is greater than 50mm, preferably 100mm, more preferably 200mm.

3. Valve (10) according to any one of claims 1 and 2, **characterized in that** the overfill protection device (22) is arranged on a side of the body (12) that is intended to be inside the gas tank (2), said device (22) preferably extending essentially parallel to the longitudinal axis, the second pivot axis (28) being on said device (22).

4. Valve (10) according to any one of claims 1 to 3, **characterized in that** the overfill protection device (22) comprises a cavity in fluid connection with the refill port (20), said cavity housing a piston (32) cooperating with a seat, said piston comprising an upstream face, a downstream face with a higher section than said upstream face and a passage between said upstream and downstream faces, said downstream face delimiting an actuating chamber (24²) of said piston (32), said chamber (24²) being controlled by an auxiliary shut-off device (34) actuated by the second float (26), and preferably the second float (26) comprises a cam (36) acting on a movable closure element (34²) of the auxiliary shut-off device (34), said float (26), when reaching a predetermined level, closing said valve (34) and thereby actuating the piston (32) to a closed position.

5. Valve (10) according to any one of claims 1 to 4 **characterized in that** the tube (38) houses a rod (40) extending between the body (12) and essentially the first pivot axis (44), said rod (40) being actuated in rotation by the pivoting movement of the first float (46).

6. Valve (10) according to claim 5, **characterized in that** the body (12) comprises a visual gauge (18) providing an indication that is based on the angular position of the rod (40) and/or electric conversion means of the angular position of the rod for providing a signal informative of the level of the liquid phase of the gas.

7. Valve (10) according to any one of claims 1 to 6, **characterized in that** the sleeve portion (42¹) comprises releasable fastening means with the tube, said means preferably comprising a screw extending radially through the wall of the sleeve portion and able to exert a pressure on the external surface of said tube.

8. Valve (10) according to any one of claims 1 to 7, **characterized in that** the other (42²) of the two arms (42², 42³) extends in an offset manner with regard to the axis of the tube (38) in order to provide space for a bevel gear (46³) of the first float (46), said arm (42²) extending in said offset manner essentially in a second plane transversal, preferably generally perpendicular, to the first one.

9. Valve (10) according to any one of claims 1 to 8, **characterized in that** the pivoting movement of the first float (46) is converted in rotational movement of the rod (40) through a bevel gear arrangement (40², 46³) at the distal end of the tube (38), the support element (42) being configured such that its arms (42², 42³) do not extend beyond the axial projection of the sleeve, at least on one side of the element in the direction of the first axis (44).

10. Valve (10) according to any one of claims 1 to 9, **characterized in that** the first and second axes (44, 28) are at least generally parallel, and/or the valve comprises a manual shut-off device (16) and/or an electromagnetic shut-off device for the gas outlet, said device(s) being at least partly housed in the body, and /or the body (12) comprises on a side that is intended to be inside the gas tank (2) an inlet port with a bore configured for receiving an inlet pipe, and/or the body (12) comprises an annular flat contact surface (12¹) with a groove (12²) for gas sealing means for contacting the outer surface of the wall (4³) of the gas tank (2), said contact surface (12¹) being essentially perpendicular to the longitudinal axis of the body, and/or the valve comprises a pressure relief device at least partly housed in the body (12).

11. Gas tank (2) comprising:
- an envelope (4) for containing pressurized gas, said envelope comprising a bottom wall (4¹), a circular side wall (4²) and an upper wall (4³) with an opening;
- a valve (10) mounted on the opening of the upper wall (4³);
**characterized in that**
the valve (10) is in accordance with any one of claims 1 to 10.

12. Gas tank (2) in accordance with claim 11, **characterized in that** the maximum height of the envelope (4) is greater than 90%, preferably 100%, more preferably 150%, even more preferably 200%, of the diameter of said envelope.

13. Gas tank (2) in accordance with any one of claims 11 and 12, **characterized in that** the first float (46) is arranged such as to have a working pivoting sector that is mainly located in a lower half of the envelope (4) and the second float (26) is arranged such as to have a working pivoting sector that is mainly located in an upper half of the envelope (4), and/or the first float (46) has a pivoting radius that is comprised between 80% and 120% of the internal radius of the envelope (4) and/or is arranged such to be at a nearest distance to the bottom wall (4¹) of less than 40mm, preferably less than 30mm, more preferably less than 20mm, and/or the overfill protection device (22) is configured to stop refilling of the tank when the level of the liquid phase of the gas reaches a predetermined level corresponding to a fill rate of the tank comprised between 70% and 90%, preferably 75% to 85% of its total capacity.

14. Vehicle like a forklift, comprising:
- a combustion engine; and
- at least one gas tank (2) for storing gaseous fuel and feeding the combustion engine;
**characterized in that**
the at least one gas tank is in accordance with any one of claims 11 to 13.

15. Vehicle in accordance with claim 14, **characterized in that** the gas thank (2) or at least one of the gas tanks is arranged horizontally, the upper wall (4³) with the opening being generally vertical.

## Patentansprüche

1. Das Ventil (10) für einen Gastank (2), umfassend:
- ein Gehäuse (12) mit einer Längsachse, das an einer Öffnung an einer Wand (4³) des Gastanks (2) zu montieren ist, mit einer Gasauslassöffnung (14) und einer Gasnachfüllöffnung (20);
- eine Füllstandsanzeige (18) mit einem schwenkbaren Schwimmer (46) zum Messen des Füllstands der flüssigen Phase des Gases;
- eine Überfüllsicherung (22) mit einem schwenkbaren Schwimmer (26) zum Begrenzen des Nachfüllens des Tanks anhand des Pegels des Gases im Flüssigzustand;
wobei
der schwenkbare Schwimmer (46) der Füllstandsanzeige ein erster, um eine, vom Gehäuse (12) entfernte erste Achse (44), schwenkbarer Schwimmer ist, wobei der schwenkbare Schwimmer (26) der Überfüllsicherung (22) ein zweiter, um eine weniger weit vom Gehäuse als die erste Achse (44) entfernte zweite Achse (28), schwenkbarer Schwimmer ist;
wobei das Ventil ferner ein sich parallel zur Längsachse des Körpers erstreckendes Rohr (38) umfasst, wobei der erste Schwimmer (46) schwenkbar an dem Rohr (38) montiert ist und ein Trägerelement (42) mit einem Manschettenabschnitt (42¹), der an einem distalen Ende des Rohres (38) angebracht ist;
**dadurch gekennzeichnet, dass** das Trägerelement (42) zwei Arme (42², 42³) aufweist, die sich, im Wesentlichen vorzugsweise parallel zur Achse des Rohres (38), von dem Manschettenabschnitt (42¹) erstrecken und die erste Schwenkachse (44) tragen, die sich zwischen den beiden Armen (42², 42³) erstreckt, wobei sich einer (42³) der beiden Armen (42², 42³) versetzt zur Achse des Rohres (38) erstreckt, um ein Kegelrad (40²) an der Stange (40) zu umgehen, wobei sich der Arm (42³) im Wesentlichen in einer ersten Ebene versetzt erstreckt.

2. Das Ventil (10) nach Anspruch 1, **dadurch gekennzeichnet, dass** der Abstand zwischen der ersten und zweiten Achse (44, 28) in Längsrichtung größer als 50mm, vorzugsweise 100mm, am besten 200mm beträgt.

3. Das Ventil (10) nach einem der Ansprüche 1 und 2, **dadurch gekennzeichnet, dass** die Überfüllsicherung (22) auf einer Seite des Gehäuses (12) angeordnet ist, die dazu bestimmt ist, sich innerhalb des Gastanks (2) zu befinden, wobei sich die Überfüllsicherung (22) im Wesentlichen vorzugsweise parallel zur Längsachse erstreckt und sich die zweite Drehachse (28) auf der Überfüllsicherung (22) befindet.

4. Das Ventil (10) nach einem der Ansprüche 1 bis 3, **dadurch gekennzeichnet, dass** die Überfüllsicherung (22) einen Hohlraum in Fluidverbindung mit der Gasnachfüllöffnung (20) umfasst, wobei der Hohlraum einen Kolben (32) aufnimmt, der mit einem Sitz zusammenwirkt, wobei der Kolben eine stromaufwärts gerichtete Fläche, eine stromabwärts gerichtete Fläche mit einem höheren Abschnitt als die stromaufwärts gerichtete Fläche und einen Durchgang zwischen den stromaufwärts gerichteten und stromabwärts gerichteten Flächen umfasst, wobei die stromabwärts gerichtete Fläche eine Betätigungskammer (24²) des Kolbens (32) begrenzt, wobei die Betätigungskammer (24²) durch eine Hilfsabsperrvorrichtung (34) gesteuert wird, die durch den zweiten Schwimmer (26) betätigt wird, und vorzugsweise der zweite Schwimmer (26) einen Nocken (36) umfasst, der auf ein bewegliches Verschlusselement (34²) der Hilfsabsperrvorrichtung (34) wirkt, wobei der Schwimmer (26) bei Erreichen eines vorbestimmten Niveaus das Ventil (34) schließt und dadurch den Kolben (32) in eine geschlossene Position bringt.

5. Das Ventil (10) nach einem der Ansprüche 1 bis 4, **dadurch gekennzeichnet, dass** das Rohr (38) eine Stange (40) aufnimmt, die sich zwischen dem Gehäuse (12) und im Wesentlichen der ersten Drehachse (44) erstreckt, wobei die Stange (40) durch die Schwenkbewegung des ersten Schwimmers (46) in Drehung betätigt wird.

6. Das Ventil (10) nach Anspruch 5, ist **dadurch gekennzeichnet, dass** das Gehäuse (12) eine optische Anzeige (18) umfasst, die eine Angabe bereitstellt, die auf der Winkellage der Stange (40) und/oder elektrischen Umwandlungsmitteln der Winkellage der Stange basiert, um ein Signal bereitzustellen, dass über den Füllstand der flüssigen Phase des Gases Auskunft gibt.

7. Das Ventil (10) nach einem der Ansprüche 1 bis 6, **dadurch gekennzeichnet, dass** der Manschettenabschnitt (42¹) lösbare Befestigungsmittel mit dem Rohr umfasst, wobei die Mittel vorzugsweise eine Schraube umfassen, die sich radial durch die Wand des Manschettenabschnitts erstreckt und einen Druck auf die Außenfläche des Rohres ausüben kann.

8. Das Ventil (10) nach einem der Ansprüche 1 bis 7, **dadurch gekennzeichnet, dass** sich der andere (42²) der beiden Arme (42², 42³) versetzt zur Achse des Rohres (38) erstreckt, um Platz für ein Kegelrad (46³) des ersten Schwimmers (46) zu schaffen, wobei sich der Arm (42²) im Wesentlichen versetzt in einer zweiten Ebene quer, im Allgemeinen vorzugsweise senkrecht zum ersten, erstreckt.

9. Das Ventil (10) nach einem der Ansprüche 1 bis 8, **dadurch gekennzeichnet, dass** die Schwenkbewegung des ersten Schwimmers (46) in eine Drehbewegung der Stange (40) durch eine Kegelradanordnung (40², 46³) am distalen Ende des Rohres (38) umgewandelt wird, wobei das Trägerelement (42) so eingestellt ist, dass seine Arme (42², 42³) nicht über den axialen Vorsprung der Manschette, mindestens auf einer Seite des Elements in Richtung der ersten Achse (44), hinausragen.

10. Das Ventil (10) nach einem der Ansprüche 1 bis 9, ist **dadurch gekennzeichnet, dass** die erste und zweite Achse (44, 28) im Allgemeinen zumindest parallel sind und/oder das Ventil eine manuelle Absperrvorrichtung (16) und/oder eine elektromagnetische Absperrvorrichtung für den Gasauslass umfasst, wobei die Vorrichtung(en) zumindest teilweise im Gehäuse untergebracht sind, und/oder das Gehäuse (12) auf einer Seite, die dazu bestimmt ist, sich innerhalb des Gastanks (2) zu befinden, eine Einlassöffnung mit einer Bohrung umfasst, die zur Aufnahme eines Einlassrohrs konfiguriert ist, und/oder das Gehäuse (12) eine ringförmige flache Kontaktfläche (12¹) mit einer Nut (12²) für Gasdichtungsmittel zum Kontaktieren der Außenfläche der Wandung (4³) des Gastanks (2) umfasst, wobei sich die Kontaktfläche (12¹) im Wesentlichen senkrecht zur Längsachse des Gehäuses befindet, und/oder das Ventil eine Druckentlastungsvorrichtung umfasst, die zumindest teilweise im Gehäuse (12) untergebracht ist.

11. Ein Gastank (2), umfassend:
- eine Ummantelung (4) zum Aufnehmen von Druckgas, wobei die Ummantelung eine untere Wand (4¹), eine kreisförmige Seitenwand (4²) und eine obere Wand (4³) mit einer Öffnung umfasst;
- ein Ventil (10), das an der Öffnung der oberen Wand (4³) montiert ist; **dadurch gekennzeichnet, dass** das Ventil (10) nach einem der Ansprüche 1 bis 10 ist.

12. Der Gastank (2) nach Anspruch 11, **dadurch gekennzeichnet, dass** die maximale Höhe der Ummantelung (4) größer als 90%, vorzugsweise 100%, am besten 150% oder sogar200% des Durchmessers der Ummantelung beträgt.

13. Der Gastank (2) nach einem der Ansprüche 11 und 12, **dadurch gekennzeichnet, dass** der erste Schwimmer (46) so angeordnet ist, dass er einen funktionierenden Schwenksektor aufweist, der sich hauptsächlich in einer unteren Hälfte der Ummantelung (4) und der Schwimmer (26) so angeordnet ist, dass er einen funktionierenden Schwenksektor aufweist, der sich hauptsächlich in einer oberen Hälfte der Ummantelung (4) befindet, und/oder der erste Schwimmer (46) einen Schwenkradius aufweist, der zwischen 80% und 120% des Innenradius der Hülle (4) liegt und/oder so angeordnet ist, dass er in einem nächsten Abstand zur Bodenwand (4¹) von weniger als 40mm liegt , vorzugsweise weniger als 30 mm, vorzugsweise weniger als 20 mm, und/oder die Überfüllsicherung (22) konfiguriert ist, um das Nachfüllen des Tanks zu stoppen, wenn der Füllstand der flüssigen Phase des Gases einen vorbestimmten Füllstand erreicht, der einer Füllrate des Tanks zwischen 70% und 90%, vorzugsweise 75% bis 85% seines Gesamtvolumens entspricht.

14. Fahrzeug wie ein Gabelstapler, umfassend:
- einen Verbrennungsmotor; und
- mindestens einen Gastank (2) zum Speichern von gasförmigem Kraftstoff und zum Speisen des Verbrennungsmotors;
**dadurch gekennzeichnet,**
**dass** mindestens ein Gastank einem der Ansprüche 11 bis 13 entspricht.

15. Fahrzeug nach Anspruch 14, **dadurch gekennzeichnet, dass** der Gastank (2) oder mindestens einer der Gastanks horizontal angeordnet ist, wobei die obere Wand (4³) mit der Öffnung im Allgemeinen vertikal ist.

## Revendications

1. Vanne (10) destinée à un réservoir de gaz (2), comprenant :
- un corps (12) comprenant un axe longitudinal, qui doit être monté sur une ouverture sur une paroi (4³) du réservoir de gaz (2), muni d'un orifice de sortie (14) pour le gaz et d'un orifice de remplissage (20) pour le gaz ;
- un indicateur de niveau (18) muni d'un flotteur pivotant (46) destiné à mesurer le niveau de la phase liquide du gaz ;
- un dispositif de protection contre le trop-plein (22) muni d'un flotteur pivotant (26) destiné à limiter le remplissage du réservoir en se basant sur le niveau de la phase liquide du gaz ;
dans laquelle
le flotteur pivotant (46) de l'indicateur de niveau représente un premier flotteur pivotant autour d'un premier axe (44) situé à distance du corps (12) ;
le flotteur pivotant (26) du dispositif de protection contre le trop-plein (22) représente un second flotteur pivotant autour d'un second axe (28) qui est situé à une distance par rapport au corps (12) inférieure à celle du premier axe (44) ;
la vanne comprend en outre un tube (38) s'étend parallèlement à l'axe longitudinal par rapport au corps (12), le premier flotteur (46) étant monté en pivotement sur ledit tube (38), et un élément de support (42) comprenant une portion en forme de manchon (42¹) adaptée sur une extrémité distale du tube (38) ;
**caractérisée en ce que**
l'élément de support (42) possèdent deux bras (42², 42³) s'étendant, de préférence à titre essentiel parallèlement à l'axe du tube (38), à partir du manchon (42¹) et supportant le premier axe de pivotement (44) qui s'étend entre lesdits deux bras (42², 42³), un bras (42³) parmi lesdits deux bras (42², 42³) s'étendant dans une position décalée par rapport à l'axe du tube (38) dans le but de contourner un engrenage conique (40²) sur la tige (40), ledit bras (42³) s'étendant dans ladite position décalée essentiellement dans un premier plan.

2. Vanne (10) selon la revendication 1, **caractérisée en ce que** la distance entre le premier et le second axe (44, 28) dans la direction longitudinale est supérieure à 50 mm, de préférence à 100 mm, de manière plus préférée à 200 mm.

3. Vanne (10) selon l'une quelconque des revendications 1 et 2, **caractérisée en ce que** le dispositif de protection contre le trop-plein (22) est disposé sur un côté du corps (12) qui est destiné à représenter le côté interne du réservoir de gaz (2), ledit dispositif (22) s'étendant de préférence à titre essentiel parallèlement à l'axe longitudinal, le second axe de pivotement (28) étant disposé sur ledit dispositif (22).

4. Vanne (10) selon l'une quelconque des revendications 1 à 3, **caractérisée en ce que** le dispositif de protection contre le trop-plein (22) comprend une cavité mise en liaison par fluide avec l'orifice de remplissage (20), le piston (32) coopérant avec un siège venant se loger dans ladite cavité, ledit piston comprenant une face amont, une face aval dont la section transversale est supérieure à celle de ladite face amont, et un passage entre ladite face amont et ladite face aval, ladite face aval délimitant une chambre d'actionnement (24²) dudit piston (32), ladite chambre (24²) étant commandée par un dispositif d'obturation auxiliaire (34) actionné par le second flotteur (26), et de préférence le second flotteur (26) comprend une came (36) qui agit sur un élément de fermeture mobile (34²) du dispositif d'obturation auxiliaire (34), ledit flotteur (26), lorsqu'il atteint un niveau prédéterminé, fermant ladite vanne (34) et actionnant ainsi le piston (32) dans la direction d'une position fermée.

5. Vanne (10) selon l'une quelconque des revendications 1 à 4, **caractérisée en ce qu'**une tige (40) s'étendant entre le corps (12) et essentiellement le premier axe de pivotement (44) vient se loger dans le tube (38), ladite tige (40) étant actionnée en rotation par le mouvement de pivotement du premier flotteur (46).

6. Vanne (10) selon la revendication 5, **caractérisée en ce que** le corps (12) comprend un indicateur visuel (18) fournissant une indication qui se base sur la position angulaire de la tige (40) et/ou un moyen de conversion électrique de la position angulaire de la tige destiné à fournir un signal qui apporte des informations concernant le niveau de la phase liquide du gaz.

7. Vanne (10) selon l'une quelconque des revendications 1 à 6, **caractérisée en ce que** la portion en forme de manchon (42¹) comprend un moyen de fixation mobile avec le tube, ledit moyen comprenant de préférence une vis s'étendant en direction radiale à travers la paroi de la portion en forme de manchon et capable d'exercer une pression sur la surface externe dudit tube.

8. Vanne (10) selon l'une quelconque des revendications 1 à 7, **caractérisée en ce que** l'autre bras (42²) parmi les deux bras (42², 42³) s'étend dans une position décalée par rapport à l'axe du tube (38) dans le but de fournir un espace pour un engrenage conique (46³) du premier flotteur (46), ledit bras (42²) s'étendant dans ladite position décalée à titre essentiel dans un second plan transversal, de préférence généralement perpendiculaire, au premier.

9. Vanne (10) selon l'une quelconque des revendications 1 à 8, **caractérisée en ce que** le mouvement de pivotement du premier flotteur (46) est transformé en un mouvement rotatif de la tige (40) par l'intermédiaire d'un agencement sous la forme d'un engrenage conique (40², 46³) à l'extrémité distale du tube (38), l'élément de support (42) étant configuré d'une manière telle que ses bras (42², 42³) ne s'étendent pas au-delà de la projection axiale du manchon, au moins sur un côté de l'élément dans la direction du premier axe (44).

10. Vanne (10) selon l'une quelconque des revendications 1 à 9, **caractérisée en ce que** le premier et le second axe (44, 28) sont, au moins de manière générale, parallèles ; et/ou la vanne comprend un dispositif d'obturation manuel (16) et/ou un dispositif d'obturation électromagnétique destiné à la sortie pour le gaz, le(s)dit(s) dispositif(s) étant en partie logé(s) dans le corps; et/ou le corps (12) comprend, sur un côté qui est destiné à représenter le côté interne du réservoir de gaz (2), un orifice d'entrée comprenant un alésage configuré pour la réception d'un tuyau d'entrée ; et/ou le corps (12) comprend une surface de contact plate annulaire (12¹) comportant une rainure (12²) prévue pour un moyen d'étanchéité pour le gaz, qui doit venir se mettre en contact avec la surface externe de la paroi (4³) du réservoir de gaz (2), ladite surface de contact (12¹) étant à titre essentiel perpendiculaire à l'axe longitudinal du corps ; et/ou la vanne comprend un dispositif de relâchement de la pression logé au moins en partie dans le corps (12).

11. Réservoir de gaz (2) comprenant :
- une enveloppe (4) destinée à contenir du gaz sous pression, ladite enveloppe comprenant une paroi inférieure (4¹), une paroi latérale circulaire (4²) et une paroi supérieure (4³) comportant une ouverture ;
- une vanne (10) monté sur l'ouverture de la paroi supérieure (4³) ;
**caractérisé en ce que**
la vanne (10) est conçue conformément à l'une quelconque des revendications 1 à 10.

12. Réservoir de gaz (2) selon la revendication 11, **caractérisé en ce que** la hauteur maximale de l'enveloppe (4) est supérieure à 90 %, de préférence à 100 %, de manière plus préférée à 150 %, de manière encore plus préférée à 200 % de diamètre de ladite enveloppe.

13. Réservoir de gaz (2) selon l'une quelconque des revendications 11 et 12, **caractérisé en ce que** le premier flotteur (46) est conçu de façon à disposer d'un secteur de travail par pivotement qui est principalement situé dans une moitié inférieure de l'enveloppe (4) et le second flotteur (26) est conçu de façon à disposer d'un secteur de travail par pivotement qui est principalement situé dans une moitié supérieure de l'enveloppe (4) ; et/ou le premier flotteur (46) possède un rayon de pivotement qui est compris entre 80 % et 120 % du rayon interne de l'enveloppe (4) et/ou est conçu de manière telle qu'il se situe à une distance la plus proche de la paroi inférieure (4¹) inférieure à 40 mm, de préférence inférieure à 30 mm, de manière plus préférée inférieure à 20 mm ; et/ou le dispositif de protection contre le trop-plein (22) est configuré pour arrêter le remplissage du réservoir lorsque le niveau de la phase liquide du gaz atteint un niveau prédéterminé correspondant à un taux de remplissage du réservoir compris entre 70 % et 90 %, de préférence de 75 % à 85 % de sa capacité totale.

14. Véhicule tel qu'un chariot élévateur à fourche, comprenant :
- un moteur à combustion ; et
- au moins un réservoir de gaz (2) destiné à entreposer un carburant gazeux et à alimenter le moteur à combustion ;
**caractérisé en ce que**
ledit au moins un réservoir de gaz est conçu conformément à l'une quelconque des revendications 11 à 13.

15. Véhicule selon la revendication 14, **caractérisé en ce que** le réservoir de gaz (2) ou au moins un des réservoirs de gaz est disposé en position horizontale, la paroi supérieure (4³) comportant l'ouverture étant généralement verticale.
